Europäisches Patentamt

European Patent Office

Office européen des brevets

(19)

(11) Veröffentlichungsnummer: **0 339 524**

**A2**

# (12) EUROPÄISCHE PATENTANMELDUNG

(21) Anmeldenummer: 89107291.0

(22) Anmeldetag: 22.04.89

(51) Int. Cl.4: **G05B 19/10**

(30) Priorität: 26.04.88 CH 1548/88

(43) Veröffentlichungstag der Anmeldung:
02.11.89 Patentblatt 89/44

(84) Benannte Vertragsstaaten:
AT CH DE ES FR IT LI

(71) Anmelder: **Wälchli, Hans, Dr.**
**Rebbergstrasse 32**
**CH-8113 Boppelsen(CH)**

(72) Erfinder: **Wälchli, Hans, Dr.**
**Rebbergstrasse 32**
**CH-8113 Boppelsen(CH)**

(74) Vertreter: **Blum, Rudolf Emil Ernst et al**
**c/o E. Blum & Co Patentanwälte Vorderberg**
**11**
**CH-8044 Zürich(CH)**

(54) Füllvorrichtung für Würste, Wurstverschliessvorrichtung sowie Füllstation für Würste.

(57) Die Füllvorrichtung und/oder die Wurstverschliessvorrichtung weist eine Reihe von Steuereinheiten auf, von denen jede ein Ein/Ausgabefeld (31-33;61-64) aufweist. Jedes Feld besitzt Eingabemittel (40,42,43,44 bis 47;70-73) und eine Anzeige (51,52,53; 66-69). Durch die Aufteilung der Steuerung in Einheiten mit separaten Ein/Ausgabefeldern wird die Bedienung der Vorrichtung erleichtert. Zwischen der Füllvorrichtung und der Verschliessvorrichtung ist eine Schnittstelle für digitale Daten vorgesehen.

Fig. 2

Figur 3

## Füllvorrichtung für Würste, Wurstverschliessvorrichtung sowie Füllstation für Würste

Die Erfindung betrifft eine Füllvorrichtung für Würste gemäss Oberbegriff des Patentanspruches 1. Es sind Füllvorrichtungen für Würste bekannt, bei denen die Steuerbefehle mittels einer Vielzahl von Drehschaltern eingegeben werden müssen. Diese Vorrichtungen sind kompliziert zu bedienen, und die zugehörigen Steuereinrichtungen erlauben nicht das einfache Ausführen verschiedener Funktionen. Es ist für die Bedienungsperson ferner schwierig, den momentanen Betriebszustand der Maschine optisch zu erfassen.

Der Erfindung liegt deshalb die Aufgabe zugrunde, eine Füllvorrichtung zu schaffen, welche diese Nachteile nicht aufweist. Dies wird durch die kennzeichnenden Merkmale des Patentanspruches 1 erreicht.

Durch die Gliederung der Steuereinrichtung in Einheiten, welche jeweils zugehörige Anzeigen und Eingabemittel aufweisen, kann der Aufbau vereinfacht und die Bedienung erleichtert werden.

Bei einem bevorzugten Ausführungsbeispiel sind die Ein/Ausgabefelder nebeneinander angeordnet, und die Anzeigen und die Tastaturen liegen in einer Reihe. Diese Anordnung ergibt eine besonders einfache Bedienung. Bei einer weiteren Ausführungsart ist die erste Einheit zur Steuerung einer Clipeinrichtung ausgestaltet, wobei auf diese Steuerfunktion auf der Tastatur durch eine Umschalttaste einfach zugegriffen werden kann.

Ferner betrifft die Erfindung eine Wurtsverschliessvorrichtung gemäss Oberbegriff des Patentanspruches 18. Auch bei diesen Vorrichtungen müssen bekannterweise eine Reihe von Steuerbefehlen eingegeben werden, wobei sich dieselben Probleme ergeben wie vorstehend bei der Füllvorrichtung. Der Erfindung liegt deshalb die Aufgabe zugrunde, eine Wurstverschliessvorrichtung zu schaffen, welche diese Nachteile nicht aufweist. Dies wird durch die kennzeichnenden Merkmale des Patentanspruches 18 erreicht.

Weiter betrifft die Erfindung eine Füllstation für Würste gemäss Oberbegriff des Patentanspruches 20. Werden eine Füllvorrichtung und eine Verschliessvorrichtung zusammen betrieben, so stellt sich das Problem, dass die Bedienungsperson an beiden Geräten die entsprechenden abgestimmten Steuerbefehle eingeben muss, was oft zu Fehlbedienungen führt. Auch wenn beide Vorrichtungen mit gespeicherten Steuerbefehlssätzen für jede Wurstsorte geladen worden sind, muss die Bedienungsperson bei beiden Vorrichtungen das richtige, auf die andere Vorrichtung abgestimme Programm wählen, was ebenfalls eine Fehelrquelle bildet.

Der Erfindung liegt deshalb die Aufgabe zugrunde, eine Füllstation der eingangs genannten Art zu schaffen, bei welcher durch eine Einstellung durch die Bedienungsperson beide Vorrichtungen korrekt einstellbar sind.

Dies wird durch die kennzeichnenden Merkmale des Patentanspruches 20 erreicht.

Dadurch kann das Steuerprogramm mit den einmal gewählten Betriebsparametern beider Vorrichtungen für jede Wurtsorte an einer Vorrichtung aufgerufen werden, wobei die entsprechenden Betriebsparameter dann an die andere Vorrichtung übertragen und von deren Steuerung übernommen werden.

Im folgenden werden Ausführungsbeispiele der Erfindung anhand der Figuren näher erläutert. Dabei zeigen:

Fig. 1 ein schematisches Diagramm der Steuereinrichtung und der übrigen Füllvorrichtung;

Fig. 2 eine Ansicht der Schalttafel der Vorrichtung mit den Ein/Ausgabefeldern.

Fig. 3 eine Ansicht der Schalttafel der Wurstverschliessvorrichtung.

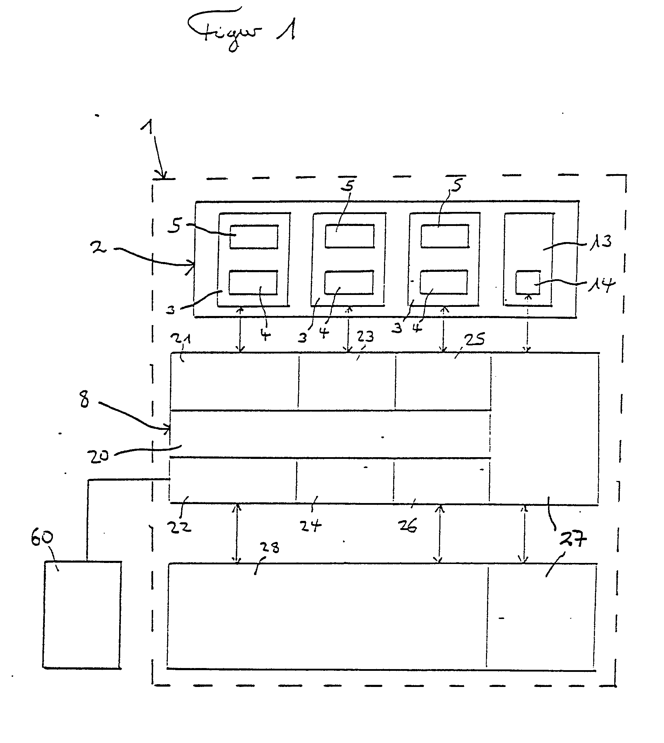

In Fig. 1 ist die Füllvorrichtung 1 schematisch dargestellt. Dabei bezeichnet 2 eine Schalttafel mit mehreren Ein/Ausgabefeldern 3. Jedes Feld weist eine Tastatur 4 und eine Anzeige 5 auf. Die Schalttafel ist mit der Steuereinrichtung 8 verbunden. Die Steuereinrichtung weist einen generellen Schaltungsteil 20 auf, sowie Schaltungen 21,22,23,24 und 25,26. Der generelle Teil 20, welcher z.B. von einer Mikroprozessorschaltungskarte gebildet werden kann, wirkt mit den speziellen Schaltungen 21 bis 26 zusammen. Dabei bildet jeweils ein Anzeigefeld 3 mit den Schaltungen 20,21,22 bzw. 20,23,24 bzw. 20,25,26 eine Einheit. Jede Einheit übernimmt die Steuerung bestimmter Funktionen des eigentlichen Füllers mit den Förderwerken und der Abdrehstation, welcher generell als 28 dargestellt ist und - da bekannt - nicht näher beschrieben wird. Die Steuereinrichtung kann aber auch Steuersignale an weitere Maschinen abgeben. So ist mit 60 eine Clipmaschine, d.h. eine Wurstverschliessvorrichtung, dargestellt, welche die Verschlussclips an den vom Füller kommenden Würsten anbringt. Eine der Einheiten, in der Fig. 1 die Einheit 3,20,21,22 steuert die Clipmaschine. Die Schaltungen 21 bis 26 sind im gezeigten Beispiel im wesentlichen Interfaceschaltungen für die jeweilig verwendete Mikroprozessorkarte. Die Aufteilung der Funktionen auf die einzelnen Schaltungen einer Einheit kann aber weitgehend frei bestimmt werden, und auch die einzelnen Schaltungen 21 bis 26 können zum Teil oder ganz von Mikroprozessoren gebildet werden. Die mit den Bezugszeichen 13,14,27 dargestellte Einheit bildet eine Steuerung für den Elevator, mittels welchem auf bekannte Weise die das Brät enthaltenden Wagen zum Einfülltrichter der Füllvorrichtung gehoben werden.

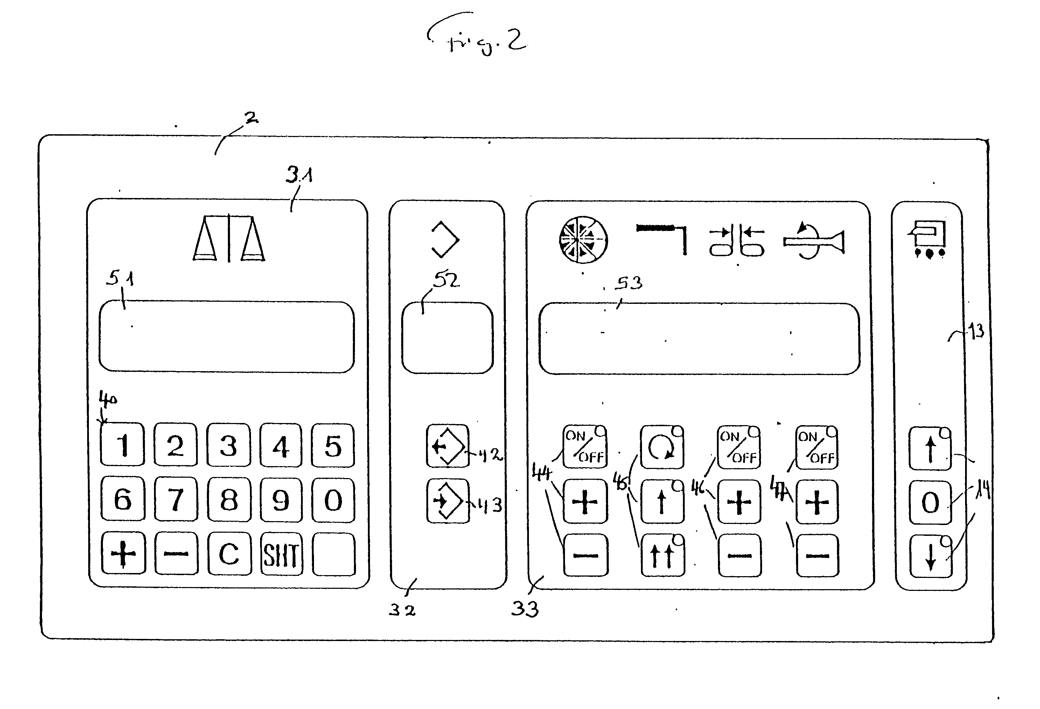

Im folgenden werden die einzelnen Funktionen anhand der Fig. 2 beschrieben, welche die bevorzugte Schalttafel der Füllvorrichtung zeigt. Dabei sind die einzelnen Ein/Ausgabefelder 31,32,33 nebeneinander angeordnet, und die Tastaturen und die Anzeigen 51,52,53 sind auf gleicher Höhe angeordnet. Das erste Ein/Ausgabefeld 31 dient primär dazu, die Gewichtseingabe für die Brätportion vorzunehmen. Dies erfolgt mittels der numerischen Tastatur 40. Der eingegebene Wert wird auf der Anzeige 51 dargestellt. Mit dieser Einheit sind aber eine Reihe von Sekundärfunktionen steuerbar, auf welche über die mit SHT bezeichnete Umschalttaste zugegriffen werden kann. Durch mehrmaliges Drücken der SHT-Taste kann dabei zu verschiedenen Funktionen zugegriffen werden, deren Parameter dann wiederum mit den numerischen Tasten eingegeben werden. Eine alphanumerische Anzeige kann dabei bei der Funktionsauswahl und -einstellung helfen. Als Funktionen können z.B. vorgesehen sein, dass ein Steuersignal an eine Clipmaschine abgegeben wird. Dabei kann die Clipimpulslänge einstellbar sein, z.B. bis zu 3 Sec. lang, was die Anpassung an unterschiedliche Fabrikate von Clipmaschinen vom Ein/Ausgabefeld her ermöglicht. Als weitere Funktion kann über das Feld gewählt werden, dass die Brätpumpe mit konstantem Druck fördert. Dies ist gewünscht, wenn das Brät nicht portioniert, sondern einer anderen Verwendung zugeführt werden soll. Eine weitere wählbare Funktion besteht z.B. in einem Betriebsstundenzähler, welcher von der Einheit gebildet wird. Das zweite Ein/Ausgabefeld 32 gehört zu einer Speichereinheit, welche z.B. von der Schaltung 20 gebildet wird. In dieser können mehrere Sätze von Steuerbefehlen, d.h. mehrere Betriebsprogramme für verschiedene Arten von Würsten, gespeichert sein. Mit den Tasten 42,43 werden die auf den anderen Feldern 31,33 gewählten Betriebsparameter in den Speicher eingelesen, bzw. aus diesem ausgelesen. Dabei sind die Einheiten so miteinander verbunden - über die Schaltung 20 -, dass die Parameter des aus dem Speicher ausgelesenen Programmes auf den Anzeigen 51 und 53 angezeigt werden. Dies ermöglicht die rasche Kontrolle, ob das richtige Programm gewählt worden ist. Einzelne Parameter können dann auch einfach über die zugehörige Tastatur verändert werden. Das dritte Feld 33 weist eine Anzeige 53 für die von dieser Einheit gesteuerten Parameter auf, sowie die Tasten 44 für die Steuerung der Brätpumpe und die Tasten 45 für die Wahl der jeweiligen Funktion des Kniepedals der Füllvorrichtung, wie Zentrierfunktion, Dauerkontakt und Start/Stop. Die Tasten 46 erlauben die Einstellung der Pause zwischen den Portionen im Bereich msec. bis mehrere Sekunden. Die Tasten 47 erlauben die Wahl der Anzahl Abdrehungen der Wurst. Mit 13 ist das Feld der genannten Elevatorsteuerung bezeichnet. Oberhalb der Anzeigen sind jeweils Symbole oder Beschriftungen vorgesehen, welche der Bedienungsperson das Erkennen der Funktion erleichtern.

Wie bereits erwähnt, arbeitet die geschilderte Füllvorrichtung in der Regel mit einer Clipmaschine, d.h. einer Wurstverschliessvorrichtung, zusammen, welche auf bekannte Weise an den Wurstenden je einen aus Aluminium geformten Clip anbringt. Das Setzen des Clips geschieht dabei während der Pausenzeit der Füll-vorrichtung.

Bevorzugterweise ist die Füllvorrichtung nun mit einer Schnittstelle versehen, die den Austausch digitaler Daten zwischen der Füllvorrichtung und einer entsprechend ausgerüsteten Clipmaschine erlaubt. Die Schnittstelle kann von der Einheit 20,22 gebildet werden.

Bei einer Ausführungsart kann dies derart erfolgen, dass einige oder alle der an der Clipmaschine eingestellten Betriebsparameter an die Füllvorrichtung übertragen und in deren Speicher 20 gespeichert werden können. Werden somit beim Einrichten der Füllvorrichtung und der Clipmaschine alle Parameter für das Füllen und Verschliessen einer bestimmten Wurstsorte an beiden Maschinen eingestellt, so können die Parameter beider Maschinen, der Füllvorrichtung und der Clipmaschine, im Speicher der Füllvorrichtung abgelegt werden. Bei einer späteren Produktion derselben Wurstsorte genügt es dann, den gespeicherten Parametersatz aus dem Speicher der Füllvorrichtung auszulesen. Die Füllvorrichtung wird dann, wie beschrieben, mit diesen Betriebsparametern geladen. Ueber die Schnittstelle werden zudem die im Speicher der Füllvorrichtung abgelegten Betriebsparameter der Clipmaschine an diese übertragen , und diese Maschine kann sich entsprechend einstellen. Es genügt bei dieser Ausführungsart also, das Speicherprogramm für die gewünschte Wurstsorte an der Füllvorrichtung abzurufen, um sowohl die Füllvorrichtung als auch die Clipmaschine auf die Betriebsparameter einzustellen. Von der Clipmaschine können dabei beliebige, bekannterweise einstellbare Parameter in der Füllvorrichtung gespeichert werden, wie z.B. die Verschlussgeschwindigkeit, das Anclippen von Wurstaufhängeschlaufen, das Schneiden zwischen den einzelnen Würsten usw.

Bevorzugterweise erfolgt die Ausführung in der Art einer digitalen Normschnittstelle, z.B. einer RS-232 Schnittstelle. Die Steuerung der Füllvorrichtung, z.B. deren Einheit 20,22, kann aber mittels der Schnittstelle weitere Funktionen übernehmen. So kann die Füllvorrichtung zunächst die Schnittstelle abfragen, um festzustellen, ob an dieser eine Clipmaschine angeschlossen ist. Ist dies der Fall und ist die Funktion Clipbetrieb an der Füllvorrichtung gewählt, so kann die Schaltung 20 der Füllvorrichtung aus der eingestellten Brätpumpengeschwindigkeit und dem eingestellten Portionsgewicht (Tasten 44 bzw. 40 der Felder 31 bzw. 33) einen Wert für die Pause zwischen den Füllschüben bilden und auf der Anzeige 53 darstellen. Der Wert für die Pausenzeit kann dabei einer in der Schaltung 20 gespeicherten Tabelle entnommen werden. Die von der Füllvorrichtung ermittelte und angezeigte Pausenzeit kann von der Bedienungsperson über die Tasten 46 geändert werden. Aus der Pausenzeit ergibt sich die Zeit, welche der Clipmaschine zur Verfügung steht, um die Clips zu setzen, bzw. die Verschlussgeschwindigkeit der Clipmaschine. Die Steuerung 20 kann daher die Verschlussgeschwindigkeit ermitteln und über die Schnittstelle an die Clipmaschine senden. Die Clipmaschine empfängt diesen Einstellwert über ihre Schnittstelle und stellt sich entsprechend ein. Die Verschlussgeschwindigkeit wird ferner an der Clipmaschine angezeigt und kann dort wiederum von der Bedienungsperson beeinflusst werden.

Bevorzugterweise wird ferner eine Fehlermeldung angegeben, wenn das aus dem Speicher der Füllvorrichtung aufgerufene Programmwerte für die Betriebsparameter der Clipmaschine enthält, eine solche aber nicht an der Schnittstelle angeschlossen ist.

Bei einer Wurstverschliessvorrichtung kann dieselbe Steuereinrichtung wie in Fig. 1 gezeigt verwendet werden. Die vorstehend zu dieser Figur gegebene Beschreibung ist dann auch für die Wurstverschliessvorrichtung massgebend, wobei natürlich die entsprechenden Aenderungen vorzunehmen sind. So entfällt die Elevatorsteuerung 13,14 mit dem zugehörigen Block der Steuereinrichtung, und die Bezugsziffer 28 bezeichnet generell die mechanischen Teile der Wurstverschliessvorrichtung und nicht des Füllers. Mit 60 ist dann ferner eine angeschlossene Füllvorrichtung bezeichnet.

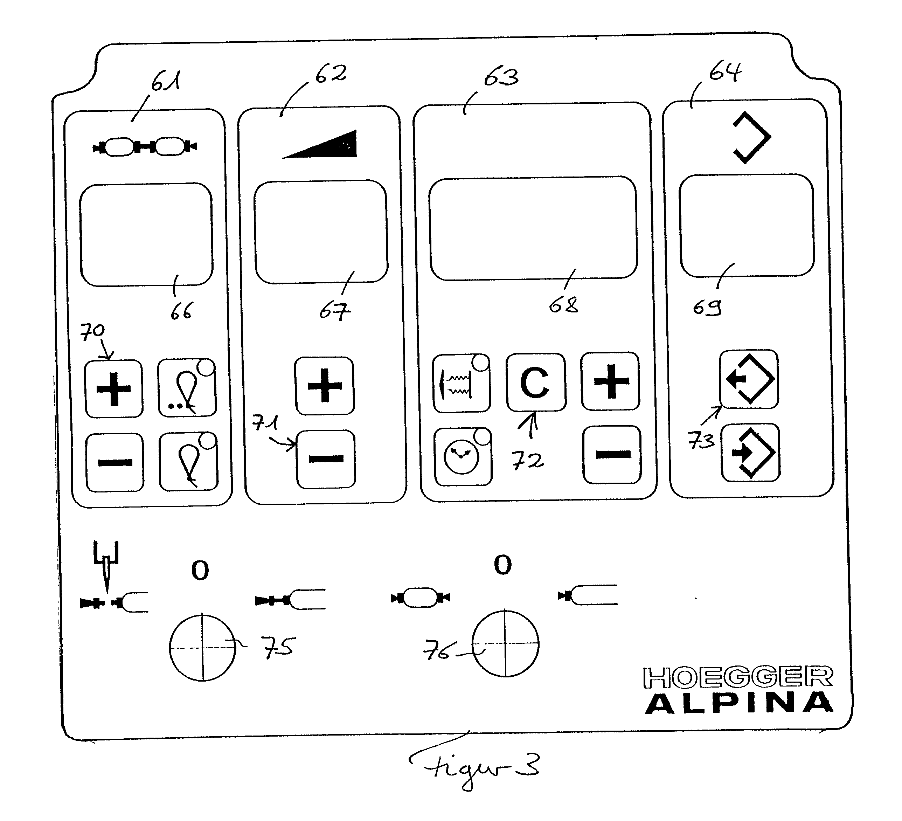

Fig. 3 zeigt die Schalttafel einer entsprechend Fig. 1 aufgebauten Wurstverschliessvorrichtung. Mit 61 bis 63 sind dabei die Ein/Ausgabefelder der Wurstverschliessvorrichtung bezeichnet (Bezugsziffer 3 in Fig. 1). Diese weisen Anzeigefelder 66 bis 69 und Tastaturen 70 bis 73 auf. Dargestellt sind ferner noch zwei konventionelle Drehschalter 75 und 76.

Als Funktionen können den einzelnen Einheiten bzw. Feldern der Steuereinrichtung die in Fig. 3 gezeigten Funktionen zugeordnet sein. So kann im Feld 61 gewählt werden, ob nach jeder Wurst oder nach einer vorwählbaren Anzahl von Würsten eine Hängeschlaufe befestigt werden soll. Im Feld 62 kann die Verschlussgeschwindigkeit der Wurstverschliessvorrichtung gewählt werden. Im Feld 63 kann die Anzahl herzustellender Würste auf bekannte Weise gewählt werden. Das Feld 64 ist das der Speichereinheit 20,23,24 zugeordnete Feld. Die in den Feldern 61 bis 63 gewählten Betriebsparameter können mittels der Tasten 73 in den Speicher eingelesen werden, wobei die ausgelesenen Parameter wieder auf den Anzeigen 66-68 dargestellt werden. Die entsprechende Beschreibung zu Fig. 2 ist auch auf Fig. 3 anwendbar, wenn die Unterschiede zwischen einer Füllvorrichtung und einer Wurstverschliessvorrichtung beachtet werden.

Bilden eine Füllvorrichtung und eine Wurstverschliessvorrichtung zusammen eine Füllstation, so stellt sich das eingangs genannten Problem, dass die Betriebsparameter an beiden Vorrichtungen separat eingestellt oder aus einem jeweiligen Speicher abgerufen werden müssen. Unanbhängig von der Ausbildung der elektronischen Steuerung der beiden Vorrichtungen lässt sich dies mit einer Datenverbindung zwischen den Vorrichtungen beheben. Es werden dann die Steuerparameter für beide Vorrichtungen in nur einem Speicher abgelegt und bei Bedarf an beide Vorrichtungen abgegeben. In der den Speicher enthaltenden Vorrichtung erfolgt dies intern, an die andere Vorrichtung gelangen die Parameter über die Schnittstelle.

Bei einer Ausführungsart kann dies derart erfolgen, dass einige oder alle der an der Clipmaschine eingestellten Betriebsparamter an die Füllvorrichtung übertragen und in deren Speicher gespeichert werden können. Werden somit beim Einrichten der Füllvorrichtung und der Clipmaschine alle Parameter für das Füllen und Verschliessen einer bestimmten Wurstsorte an beiden Maschinen eingestellt, so können die Parameter beider Maschinen, der Füllvorrichtung und der Clipmaschine, im Speicher der Füllvorrichtung abgelegt werden. Bei einer spätern Produktion derselben Wurstsorte genügt es dann, den gespeicherten Parametersatz aus dem Speicher der Füllvorrichtung auszulesen. Die Füllvorrichtung wird dann, wie beschrieben, mit diesen Betriebsparametern geladen. Ueber die Schnittstelle werden zudem die im Speicher der Füllvorrichtung abgelegten Betriebsparameter der Clipmaschine an diese übertragen, und diese Maschine kann sich entsprechend einstellen. Es genügt bei dieser Ausführungsart also, das Speicherprogramm für die gewünschte Wurstsorte an der Füllvorrichtung abzurufen, um sowohl die Füllvorrichtung als auch die Clipmaschine auf die Betriebsparameter einzustellen. Von der Clipmaschine können dabei beliebige, bekannterweise einstellbare Parameter in der Füllvorrichtung gespeichert werden, wie z.B. die Verschlussgeschwindigkeit, das Anclippen von Wurstaufhängeschlaufen, das Schneiden zwischen den einzelnen Würsten, usw.

Bevorzugterweise erfolgt die Ausführung in der Art einer digitalen Normschnittstelle, z.B. einer RS-232 Schnittstelle. Die Steuerung der Füllvorrichtung kann aber mittels der Schnittstelle weitere Funktionen übernehmen. So kann die Füllvorrichtung zunächst die Schnittstelle abfragen, um festzustellen, ob an dieser eine Clipmaschine angeschlossen ist. ist dies der Fall und ist die Funktion Clipbetrieb an der Füllvorrichtung gewählt, so kann die Schaltung der Füllvorrichtung aus der eingestellten Brätpumpengeschwindigkeit und dem eingestellten Portionsgewicht (Tasten 44 bzw. 40 der Felder 31 bzw. 33) einen Wert für die Pause zwischen den Füllschüben bilden und auf der Anzeige 53 darstellen. Der Wert für die Pau senzeit kann dabei einer in der Schaltung 20 gespeicherten Tabelle entnommen werden. Die von der Füllvorrichtung ermittelte und angezeigte Pausenzeit kann von der Bedienungsperson über die Tasten 46 geändert werden. Aus der Pausenzeit ergibt sich die Zeit, welche der Clipmaschine zur Verfügung steht, um die Clips zu setzen, bzw. die Verschlussgeschwindigkeit der Clipmaschine. Die Steuerung kann daher die Verschlussgeschwindigkeit ermitteln und über die Schnittstelle an die Clipmaschine senden. Die Clipmaschine empfängt diesen Einstellwert über ihre Schnittstelle und stellt sich entsprechend ein. Die Verschlussgeschwindigkeit wird ferner an der Clipmaschine angezeigt und kann dort wiederum von der Bedienungsperson beeinflusst werden.

Bevorzugterweise wird ferner eine Fehlermeldung angegeben, wenn das aus dem Speicher der -Füllvorrichtung aufgerufene Programmwerte für die Betriebsparameter der Clipmaschine enthält, eine solche aber nicht an der Schnittstelle angeschlossen ist.

## Ansprüche

1. Füllvorrichtung für Würste, mit Förderwerken für das Brät und mindestens einer Füll- und Abdrehstation, gekennzeichnet durch eine Steuereinrichtung (2,8) mit einer ersten Einheit (3,4,5,20,21,22) für die Steuerung des Portionsgewichts und für eine erste Gruppe von Steuerfunktionen, einer Speichereinheit (3,4,5,20,23,24) zur Speicherung von Steuerbefehlen, und mit einer zweiten Einheit (3,4,5,20,25,26) für eine zweite Gruppe von Steuerfunktionen, wobei jede Einheit ein zugeordnetes Ein/Ausgabefeld (3) aufweist und jedes Feld eine numerische und/oder alphanumerische Anzeige (5) und Befehlseingabemittel (4) aufweist.

2. Füllvorrichtung nach Anspruch 1, gekennzeichnet durch eine weitere Einheit zur Steuerung eines Elevators, welche Einheit ein Eingabefeld (13) mit Befehlseingabemitteln (14) aufweist.

3. Füllvorrichtung nach Anspruch 1 oder 2, dadurch gekennzeichnet, dass die erste Einheit zur Steuerung einer Clipeinrichtung (60) ausgestaltet ist, wobei die Länge des Clipimpulssignales über das erste Ein/Ausgabefeld einstellbar ist.

4. Füllvorrichtung nach einem der Ansprüche 1 bis 3, dadurch gekennzeichnet, dass die erste Einheit zur Steuerung eines der Förderwerke zur Förderung mit konstantem Förderdruck ausgestaltet ist.

5. Füllvorrichtung nach einem der Ansprüche 1 bis 4, dadurch gekennzeichnet, dass die Speichereinheit mit den anderen Einheiten derart verbunden ist, dass gespeicherte Daten auf die Anzeigen aller Ein/Ausgabefelder übertragbar sind.

6. Füllvorrichtung nach einem der Ansprüche 1 bis 5, dadurch gekennzeichnet, dass die zweite Einheit Steuerbefehle für die Flügelzellenpumpe, für die Abdrehstation und für ein Kniepedal bearbeitet.

7. Füllvorrichtung nach einem der Ansprüche 1 bis 6, dadurch gekennzeichnet, dass die Steuereinrichtung mindestens einen Mikroprozessor aufweist, welcher zur Ausführung der Funktionen mindestens zweier Einheiten geschaltet ist.

8. Füllvorrichtung nach einem der Ansprüche 1 bis 7, dadurch gekennzeichnet, dass die Ein/Ausgabefelder nebeneinander auf einer gemeinsamen Schalttafel angeordnet sind, wobei die Anzeigen und die Eingabemittel in jeweils gleicher Höhe angeordnet sind.

Füllvorrichtung nach Anspruch 8, dadurch gekennzeichnet, dass als Befehlseingabemittel Tastaturen vorgesehen sind, welche jeweils unterhalb der Anzeige angeordnet sind, und dass das Feld oberhalb der Anzeige einen Abschnitt zum Anbringen von Symbolen oder Beschriftungen aufweist.

10. Füllvorrichtung nach Anspruch 9, dadurch gekennzeichnet, dass die Tastatur mindestens einer Einheit mindestens eine Umschalttaste aufweist, mittels welcher die Tasten der Tastatur auf mindestens eine weitere Funktion umschaltbar sind.

11. Füllvorrichtung nach einem der Ansprüche 1 bis 10, dadurch gekennzeichnet, dass die Steuereinrichtung eine Schnittstellenschaltung (20,22) aufweist, mittels welcher Betriebsparameter in digitaler Form von einer mit der Füllvorrichtung verbundenen Wurstverschliessvorrichtung (60) empfangbar und in die Speichereinheit (20) einlesbar, sowie aus der Speichereinheit auslesbar und an die Wurstverschliessvorrichtung (60) sendbar sind.

12. Füllvorrichtung nach Anspruch 11, dadurch gekennzeichnet, dass die Schnittstellenschaltung eine RS-232 Normschnittstelle bildet.

13. Füllvorrichtung nach Anspruch 11 oder 12, dadurch gekennzeichnet, dass die Steuereinrichtung eine Abfrageschaltung aufweist, mittels welcher feststellbar ist, ob eine Wurstverschliessvorrichtung an der Schnittstelle angeschlossen ist.

14. Füllvorrichtung nach Anspruch 13, dadurch gekennzeichnet, dass durch die Steuereinrichtung ein Pausendauersignal in Abhängigkeit von einer Portionsgewichtseingabe an der ersten Einheit und einer Brätpumpengeschwindigkeitseingabe an der zweiten Einheit sowie ein Verschlussgeschwindigkeitssignal bildbar ist, welches über die Schnittstellenschaltung an die Wurstverschliessvorrichtung sendbar ist.

15. Füllvorrichtung nach Anspruch 13 oder 14, dadurch gekennzeichnet, dass durch die Abfrageschaltung eine Fehlermeldung erzeugbar ist, wenn das in den Anzeigefeldern (51, 52, 53) angezeigte Programm Betriebsparameter für eine Wurstverschliessvorrichtung enthält und zugleich feststellbar ist, dass an der Schnittstelle keine Wurstverschliessvorrichtung angeschlossen ist.

16. Wurstverschliessvorrichtung zur Verwendung mit einer Füllvorrichtung nach einem der Ansprüche 11 bis 15, mit einer die Funktionen der Wurstverschliessvorrichtung mit einstellbaren Betriebsparametern steuernden Steuerung, gekennzeichnet durch eine mit der Schnittstellenschaltung der Füllvorrichtung verbindbare Schnittstellenschaltung, mittels welcher mindestens einer der einstellbaren Betriebsparameter als Digitalwert ausgebbar und empfangbar ist.

17. Wurstverschliessvorrichtung nach Anspruch 16, dadurch gekennzeichnet, dass die Wurstverschliessvorrichtung eine Steuereinrichtung aufweist, welche aus mehreren Einheiten aufgebaut ist, wobei jeder Einheit ein Ein/Ausgabefeld zugeordnet ist, und jedes Feld (61-64) eine numerische und/oder alphanumerische Anzeige (66-69) und Befehlseingabemittel (70-73) aufweist.

18. Wurstverschliessvorrichtung zum Setzen von Verschlussclips an Würsten, gekennzeichnet durch eine mehrere Steuereinheiten und eine Speichereinheit auf weisende Steuereinrichtung, wobei jeder Einheit ein Ein/Ausgabefeld (61-64) zugeordnet ist und jedes Feld eine numerische und/oder alphanumerische Anzeige (66-69) und Befehlseingabemittel (70-73) aufweist.

19. Wurstverschliessvorrichtung nach Anspruch 18, dadurch gekennzeichnet, dass eine Steuereinheit für das Befestigen von Wursthängeschlaufen, eine Steuereinheit für die Verschliessgeschwindigkeit und eine Steuereinheit für die Anzahl zu verschliessender Würste vorgesehen ist.

20. Füllstation für Würste, umfassend eine Füllvorrichtung mit Förderwerken für das Brät und eine Verschliessvorrichtung, welche Verschlussclips für die einzelnen aus der Füllvorrichtung austretenden Würste setzt, wobei die Füllvorrichtung und die Verschliessvorrichtung je eine Steuereinrichtung und mindestens eine der Vorrichtungen einen Speicher für Steuerbefehle aufweist, dadurch gekennzeichnet, dass die Füllvorrichtung und die Verschliessvorrichtung je eine und miteinander verbundene Schnittstellenschaltung für digitale Daten aufweist, womit Steuerbefehle der Steuereinrichtungen von der einen Vorrichtung an die andere Vorrichtung übertragbar und in der Speichereinheit speicherbar bzw. aus dieser abrufbar sind.

21. Füllstation nach Anspruch 20, dadurch gekennzeichnet, dass die Schnittstellenschaltung eine RS-232 Normschnittstelle bildet.

22. Füllstation nach Anspruch 20 oder 21, dadurch gekennzeichnet, dass die Steuereinrichtung einer Vorrichtung eine Abfrageschaltung aufweist, mittels welcher feststellbar ist, ob die andere Vorrichtung an der Schnittstelle angeschlossen ist.

23. Füllstation nach Anspruch 22, dadurch gekennzeichnet, dass durch die Steuereinrichtung der Füllvorrichtung ein Pausendauersignal in Abhängigkeit von einer Portionsgewichtseingabe und einer Brätpumpengeschwindigkeitseingabe sowie ein Verschlussgeschwin digkeitssignal bildbar ist, welches über die Schnittstellenschaltung an die Wurstverschliessvorrichtung sendbar ist.

24. Füllstation nach Anspruch 22 und 23, dadurch gekennzeichnet, dass durch die Abfrageschaltung eine Fehlermeldung erzeugbar ist, wenn das aus der Speicherheinheit in der Füllstation abgerufene Programm Steuerbefehle für eine Wurstverschliessvorrichtung enthält und zugleich feststellbar ist, dass an der Schnittstelle keine Wurtsverschliessvorrichtung angeschlossen ist.

Figur 1

Fig. 2

Figur 3

EP 0 339 524 A2